# EUROPEAN PATENT APPLICATION

(11) **EP 4 836 311 A1**
(43) Date of publication of application: **04.11.2026**
(21) Application number: 24913756.3
(22) Date of filing: 30.12.2024
(51) Int. Cl.: H04B 7/06, H04W 72/21, H04W 72/1268, H04W 24/08, H04B 17/318, H04B 17/336, H04L 5/00

(54) **METHOD AND APPARATUS FOR TRANSMITTING AND RECEIVING CHANNEL STATE INFORMATION IN WIRELESS COMMUNICATION SYSTEM**

(30) Priority: 29.12.2023 US 202363615791 P
(71) Applicant: LG Electronics Inc., Yeongdeungpo-gu Seoul 07336 (KR)
(72) Inventor: KIM, Hyungtae, Seoul 06772 (KR); GO, Seongwon, Seoul 06772 (KR); KANG, Jiwon, Seoul 06772 (KR); PARK, Haewook, Seoul 06772 (KR); KIM, Seonwook, Seoul 06772 (KR)
(74) Representative: Plasseraud IP
(86) International application number: PCT/KR2024/021482
(87) International publication number: WO 2025/143952

(57) **Abstract**

Disclosed are a method and apparatus for transmitting and receiving channel state information in a wireless communication system. The method according to an embodiment of the present disclosure may comprise the steps of: receiving, by a UE, configuration information related to a CSI report from a base station; receiving, by the UE from the base station, a downlink RS on one or more RS resources; transmitting, by the UE, a first uplink transmission to the base station on the basis that an event related to the CSI report is satisfied; and transmitting, by the UE to the base station, a second uplink transmission including a report value derived on the basis of the downlink **RS.**

## Description

### [Technical Field]

The present disclosure relates to a wireless communication system, and in more detail, relates to a method and an apparatus of transmitting and receiving channel state information in a wireless communication system.

### [Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

### [Disclosure]

### [Technical Problem]

A technical object of the present disclosure is to provide a method and an apparatus for transmitting and receiving channel state information (CSI) (including beam reporting).

In addition, an additional technical object of the present disclosure is to provide a method and apparatus for performing (UE-initiated) beam reporting that is initiated by a UE or event-driven.

The technical objects to be achieved by the present disclosure are not limited to the above-described technical objects, and other technical objects which are not described herein will be clearly understood by those skilled in the pertinent art from the following description.

### [Technical Solution]

A method according to an aspect of the present disclosure may include: receiving, by a user equipment (UE), configuration information related to channel state information (CSI) report from a base station; receiving, by the UE, a downlink reference signal (RS) on one or more RS resources from the base station; transmitting, by the UE, a first uplink transmission to the base station based on an event related to the CSI report being satisfied; and transmitting, by the UE, a second uplink transmission including a report value derived based on the downlink RS to the base station.

A method according to an additional aspect of the present disclosure may include: transmitting, by a base station, configuration information related to channel state information (CSI) report to a user equipment (UE); transmitting, by the base station, a downlink reference signal (RS) on one or more RS resources to the UE; receiving, by the base station, a first uplink transmission from the UE based on an event related to the CSI report being satisfied; and receiving, by the base station, a second uplink transmission including a report value derived based on the downlink RS fromt the UE.

### [Technical Effects]

According to an embodiment of the present disclosure, beam reporting is possible only when an event is satisfied without an additional indication/configuration of a base station for beam reporting.

In addition, according to an embodiment of the present disclosure, signaling overhead can be reduced and flexible/appropriate beam reporting can be performed as ambient conditions change.

Effects achievable by the present disclosure are not limited to the above-described effects, and other effects which are not described herein may be clearly understood by those skilled in the pertinent art from the following description.

### [Brief Description of the Drawings]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a diagram which illustrates a downlink beam management operation in a wireless communication system to which the present disclosure may be applied.
FIG. 8 is a diagram which illustrates a downlink beam management procedure using SSB in a wireless communication system to which the present disclosure may be applied.
FIG. 9 is a diagram which illustrates a downlink beam management operation using CSI-RS in a wireless communication system to which the present disclosure may be applied.
FIG. 10 is a diagram which illustrates an Rx beam determination process of a terminal in a wireless communication system to which the present disclosure may be applied.
FIG. 11 is a diagram which illustrates a Tx beam determination process of a base station in a wireless communication system to which the present disclosure may be applied.
FIG. 12 is a diagram which illustrates resource allocation in a time and frequency domain related to a downlink beam management operation in a wireless communication system to which the present disclosure may be applied.
FIG. 13 is a diagram illustrating a signaling procedure between a base station and a UE for a UE initiation beam reporting method according to one embodiment of the present disclosure.
FIG. 14 is a diagram illustrating the operation of a UE for reporting channel state information according to one embodiment of the present disclosure.
FIG. 15 is a diagram illustrating the operation of a base station for reporting channel state information according to one embodiment of the present disclosure.
FIG. 16 illustrates a block diagram of a wireless communication device according to an embodiment of the present disclosure.

### [Detailed Description]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LIE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211 (physical channels and modulation), TS 38.212(multiplexing and channel coding), TS 38.213(physical layer procedures for control), TS 38.214 (physical layer procedures for data), TS 38.300 (NR and NG-RAN(New Generation-Radio Access Network) overall description), TS 38.331(radio resource control protocol specification) may be referred to.

Abbreviations of terms which may be used in the present disclosure is defined as follows.
- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

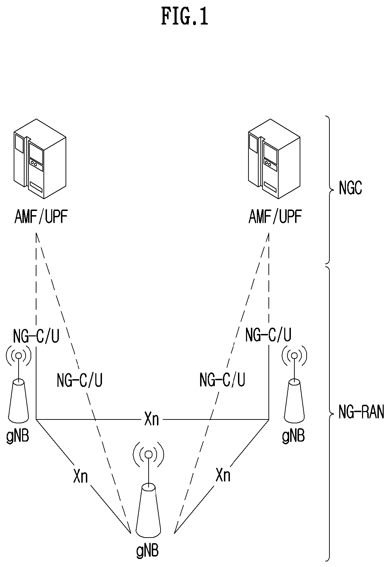

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS (access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

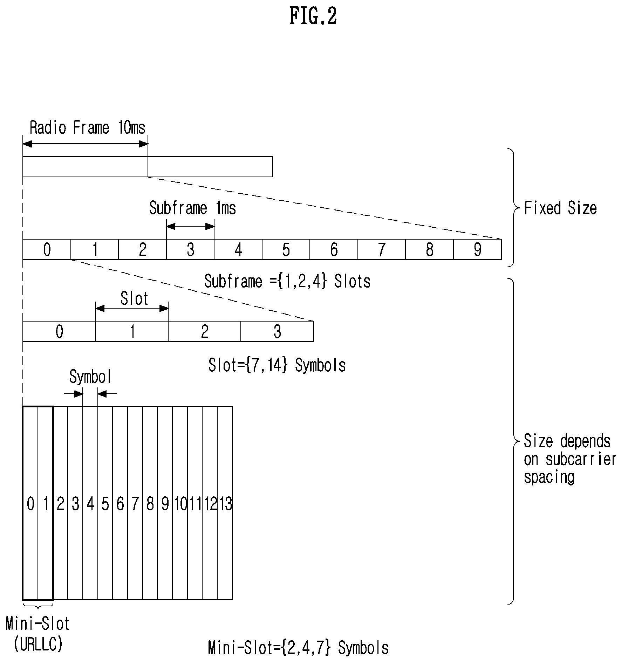

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise.

An NR frequency band is defined as a frequency range in two types (FR1, FR2). FR1, FR2 may be configured as in the following Table 2. In addition, FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of T_{c}=1/(Δfₘₐₓ·N_{f}). Here, Δfₘₐₓ is 480·103 Hz and N_{f} is 4096. Downlink and uplink transmission is configured (organized) with a radio frame having a duration of T_{f}=1/(ΔfₘₐₓN_{f}/100)·T_{c}=10ms. Here, a radio frame is configured with 10 subframes having a duration of T_{sf}=(ΔfₘₐₓN_{f}/1000)·T_{c}=1ms, respectively. In this case, there may be one set of frames for an uplink and one set of frames for a downlink. In addition, transmission in an uplink frame No. i from a terminal should start earlier by T_{TA}= (N_{TA}+N_{TA,offset}) T_{c} than a corresponding downlink frame in a corresponding terminal starts. For a subcarrier spacing configuration µ, slots are numbered in an increasing order of nₛ^{µ} ∈ {0,..., Nₛₗₒₜ^{subframe,µ}-1} in a subframe and are numbered in an increasing order of n_{s, f}^{µ}∈ {0, ..., Nₛₗₒₜ^{frame,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used.

Table 3 represents the number of OFDM symbols per slot (N_{symb}^{slot}), the number of slots per radio frame (Nₛₗₒₜ^{frame,µ}) and the number of slots per subframe (Nₛₗₒₜ ^{subframe, µ}) in a normal CP and Table 4 represents the number of OFDM symbols per slot, the number of slots per radio frame and the number of slots per subframe in an extended CP.

**[Table 3]**

| µ | N_{symb}^{stot} | Nₛₗₒₜ^{frame, µ} | Nₛₗₒₜ^{subframe, µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe, µ} |
|---|---|---|---|
| 2 | 12 | 40 | 4 |

FIG. 2 is an example on µ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

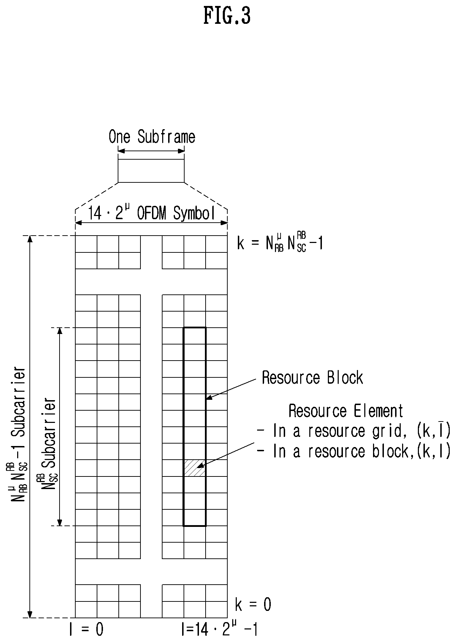

FIG. 3 illustrates a resource grid in a wireless communication system to which the present disclosure may be applied.

In reference to FIG. 3, it is illustratively described that a resource grid is configured with N_{RB}^{µ}N_{sc}^{RB} subcarriers in a frequency domain and one subframe is configured with 14·2^{µ} OFDM symbols, but it is not limited thereto. In an NR system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies. In this case, one resource grid may be configured per µ and antenna port p. Each element of a resource grid for µ and an antenna port p is referred to as a resource element and is uniquely identified by an index pair (k,l'). Here, k=0,..., N_{RB}^{µ}N_{sc}^{RB}-1 is an index in a frequency domain and l'=0,..., 2^{µ}N_{symb}^{(µ)}-1 refers to a position of a symbol in a subframe. When referring to a resource element in a slot, an index pair (k,l) is used. Here, l=0,..., N_{symb}^{µ}-1. A resource element (k,l') for µ and an antenna port p corresponds to a complex value, a_{k,l'}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain.

Point A plays a role as a common reference point of a resource block grid and is obtained as follows.
- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. [Equation 1] ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. [Equation 2] ${n}_{CRB}^{μ} = {n}_{PRB}^{μ} + {N}_{BWP , i}^{start , μ}$

N_{BWP,i}^{start,µ} is a common resource block that a BWP starts relatively to common resource block 0.

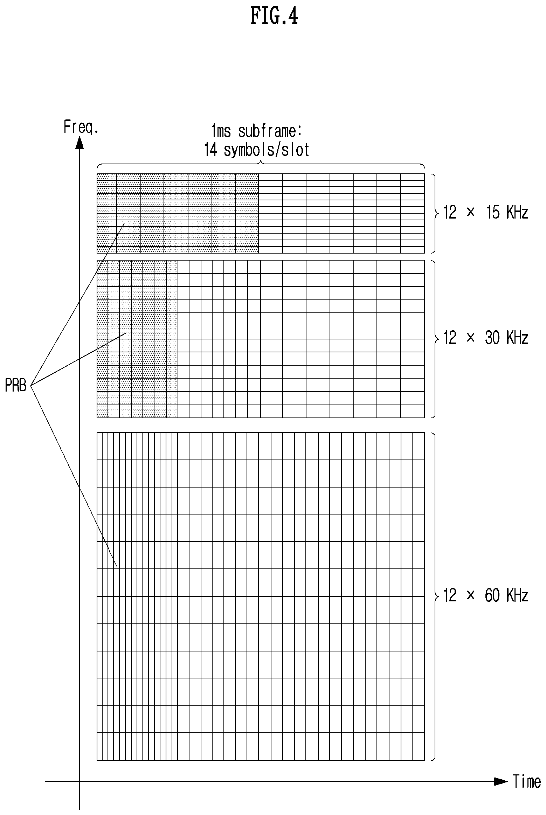

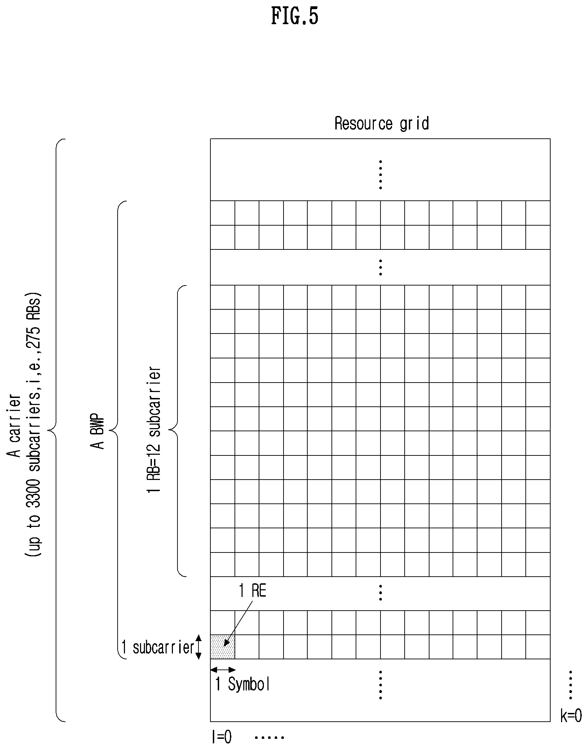

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

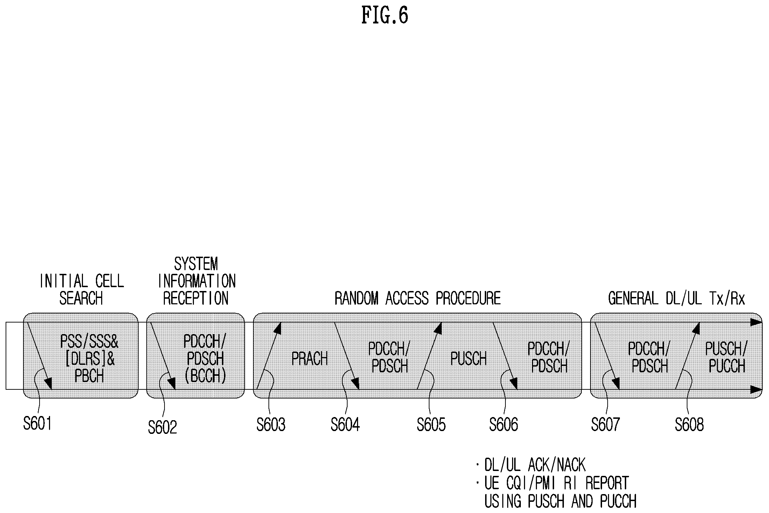

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI (Cell Radio Network Temporary Identifier) or a CS-RNTI (Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### Quasi-co Locaton (QCL)

An antenna port is defined so that a channel where a symbol in an antenna port is transmitted can be inferred from a channel where other symbol in the same antenna port is transmitted. When a property of a channel where a symbol in one antenna port is carried may be inferred from a channel where a symbol in other antenna port is carried, it may be said that 2 antenna ports are in a QC/QCL (quasi co-located or quasi co-location) relationship.

Here, the channel property includes at least one of delay spread, doppler spread, frequency/doppler shift, average received power, received timing/average delay, or a spatial RX parameter. Here, a spatial Rx parameter means a spatial (Rx) channel property parameter such as an angle of arrival.

A terminal may be configured at list of up to M TCI-State configurations in a higher layer parameter PDSCH-Config to decode a PDSCH according to a detected PDCCH having intended DCI for a corresponding terminal and a given serving cell. The M depends on UE capability.

Each TCI-State includes a parameter for configuring a quasi co-location relationship between ports of one or two DL reference signals and a DM-RS(demodulation reference signal) of a PDSCH.

A quasi co-location relationship is configured by a higher layer parameter qcl-Type1 for a first DL RS and qcl-Type2 for a second DL RS (if configured). For two DL RSs, a QCL type is not the same regardless of whether a reference is a same DL RS or a different DL RS.

A QCL type corresponding to each DL RS is given by a higher layer parameter qcl-Type of QCL-Info and may take one of the following values.
- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

For example, when a target antenna port is a specific NZP CSI-RS, it may be indicated/configured that a corresponding NZP CSI-RS antenna port is quasi-colocated with a specific TRS with regard to QCL-Type A and is quasi-colocated with a specific SSB with regard to QCL-Type D. A terminal received such indication/configuration may receive a corresponding NZP CSI-RS by using a doppler, delay value measured in a QCL-TypeA TRS and apply a Rx beam used for receiving QCL-TypeD SSB to reception of a corresponding NZP CSI-RS.

UE may receive an activation command by MAC CE signaling used to map up to 8 TCI states to a codepoint of a DCI field 'Transmission Configuration Indication'.

### beam management (BM)

A BM procedure is L1(layer 1)/L2(layer 2) procedures to obtain and maintain a set of beams of a base station (e.g., a gNB, a TRP, etc.) and/or terminal (e.g., a UE) beams which may be used for downlink(DL) and uplink(UL) transmission/reception, it may include the following procedures and terms.
Beam measurement: An operation that a base station or a UE measures a property of a received beamformed signal
Beam determination: An operation that a base station or a UE selects its Tx beam / Rx beam
Beam sweeping: An operation that a spatial region is covered by using a Tx and/or Rx beam for a certain time interval in a pre-determined method
Beam report: An operation that a UE reports information of a beamformed signal based on beam measurement

A BM procedure may be classified into (1) a DL BM procedure using a SS(synchronization signal)/PBCH(physical broadcast channel) Block or a CSI-RS and (2) an UL BM procedure using an SRS(sounding reference signal).

In addition, each BM procedure may include Tx beam sweeping for determining a Tx Beam and Rx beam sweeping for determining a Rx beam.

Hereinafter, a DL BM procedure will be described.

A DL BM procedure may include (1) transmission of beamformed DL RSs (reference signals) of a base station (e.g., a CSI-RS or a SS Block(SSB)) and (2) beam reporting of a terminal.

Here, beam reporting may include preferred DL RS ID(identifier)(s) and corresponding L1-RSRP(Reference Signal Received Power).

The DL RS ID may be a SSBRI(SSB Resource Indicator) or a CRI(CSI-RS Resource Indicator).

Hereinafter, a DL BM procedure using an SSB will be described.

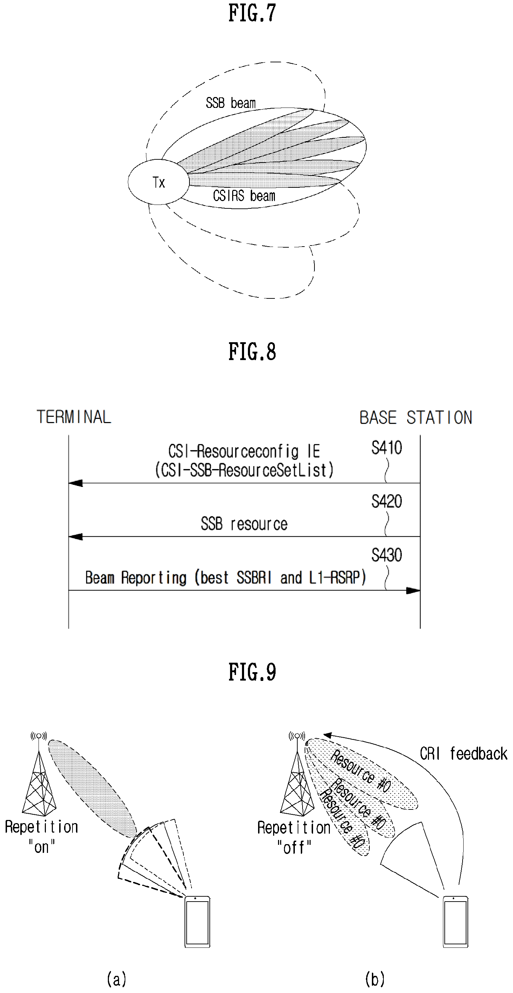

FIG. 7 is a diagram which illustrates a downlink beam management operation in a wireless communication system to which the present disclosure may be applied.

In reference to FIG. 7, an SSB beam and a CSI-RS beam may be used for beam measurement. A measurement metric is L1-RSRP per resource/block. An SSB may be used for coarse beam measurement and a CSI-RS may be used for fine beam measurement. An SSB may be used for both of Tx beam sweeping and Rx beam sweeping.

Rx beam sweeping using an SSB may be performed while an UE changes an Rx beam for the same SSBRI across a plurality of SSB bursts. In this case, one SS burst includes one or more SSBs and one SS burst set includes one or more SSB bursts.

FIG. 8 is a diagram which illustrates a downlink beam management procedure using SSB in a wireless communication system to which the present disclosure may be applied.

A configuration on a beam report using an SSB is performed in a CSI/beam configuration in a RRC connected state (or a RRC connected mode).

In reference to FIG. 8, a terminal receives CSI-ResourceConfig IE including CSI-SSB-ResourceSetList including SSB resources used for BM from a base station (S410).

Table 6 represents an example of CSI-ResourceConfig IE and as in Table 6, a BM configuration using an SSB configures an SSB like a CSI-RS resource without being separately defined.

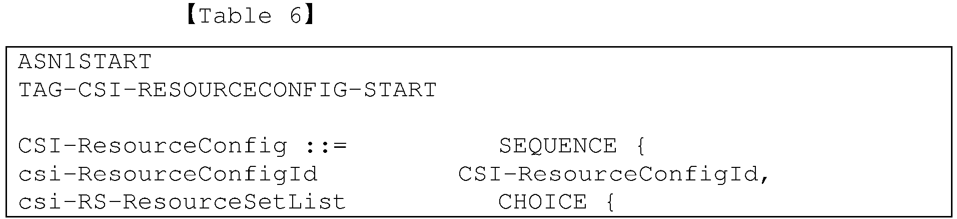

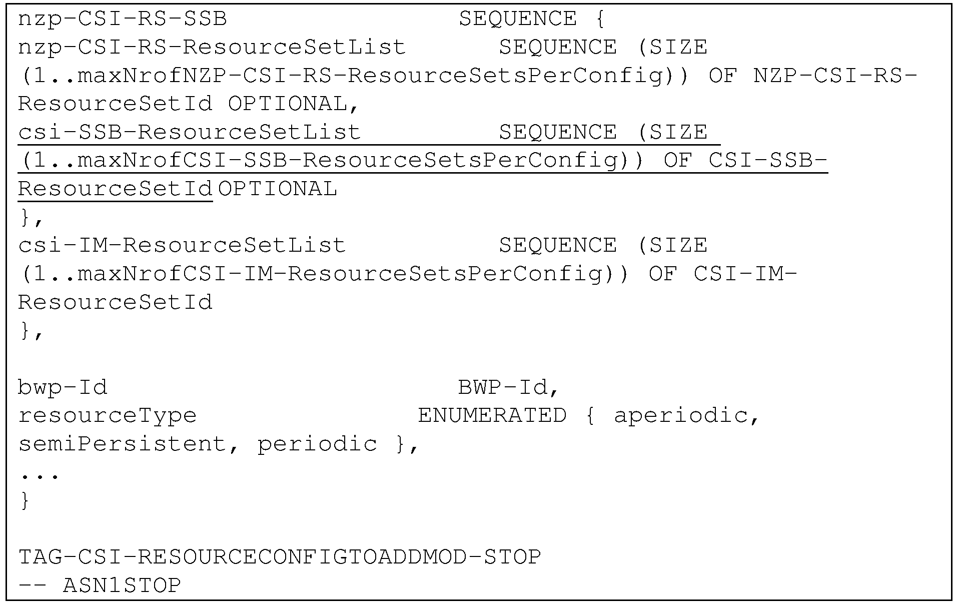

In Table 6, a csi-SSB-ResourceSetList parameter represents a list of SSB resources used for beam management and reporting in one resource set. Here, an SSB resource set may be configured as {SSBx1, SSBx2, SSBx3, SSBx4, ...}. An SSB index may be defined from 0 to 63.

A terminal receives an SSB resource from the base station based on the CSI-SSB-ResourceSetList (S420).

When CSI-RS reportConfig related to a report on a SSBRI and L1-RSRP is configured, the terminal performs (beam) reporting of the best SSBRI and corresponding L1-RSRP to a base station (S430).

Hereinafter, a DL BM procedure using a CSI-RS will be described.

Describing a usage of a CSI-RS, i) a repetition parameter is configured for a specific CSI-RS resource set and when TRS_info is not configured, a CSI-RS is used for beam management. ii) when a repetition parameter is not configured and TRS_info is configured, a CSI-RS is used for a TRS(tracking reference signal). iii) when a repetition parameter is not configured and TRS_info is not configured, a CSI-RS is used for CSI acquisition.

Such a repetition parameter may be configured only for CSI-RS resource sets associated with CSI-ReportConfig having a report of L1 RSRP or 'No Report(or None)'.

If a terminal is configured with CSI-ReportConfig in which reportQuantity is configured as 'cri-RSRP' or 'none' and CSI-ResourceConfig for channel measurement (a higher layer parameter resourcesForChannelMeasurement) does not include a higher layer parameter 'trs-Info' and includes NZP-CSI-RS-ResourceSet in which a higher layer parameter 'repetition' is configured, the terminal may be configured only with a same number of port (1-port or 2-port) having a higher layer parameter 'nrofPorts' for all CSI-RS resources in NZP-CSI-RS-ResourceSet.

When (a higher layer parameter) repetition is configured as 'ON', it is related to a Rx beam sweeping procedure of a terminal. In this case, when a terminal is configured with NZP-CSI-RS-ResourceSet, the terminal may assume that at least one CSI-RS resource in NZP-CSI-RS-ResourceSet is transmitted with the same downlink spatial domain transmission filter. In other words, at least one CSI-RS resource in NZP-CSI-RS-ResourceSet is transmitted through the same Tx beam. Here, at least one CSI-RS resource in NZP-CSI-RS-ResourceSet may be transmitted in a different OFDM symbol. In addition, a terminal does not expect to receive a different periodicity in periodicityAndOffset in all CSI-RS resources in NZP-CSI-RS-Resourceset.

Meanwhile, when repetition is configured as 'OFF', it is related to a Tx beam sweeping procedure of a base station. In this case, when repetition is configured as 'OFF', a terminal does not assume that at least one CSI-RS resource in NZP-CSI-RS-ResourceSet is transmitted in the same downlink spatial domain transmission filter. In other words, at least one CSI-RS resource in NZP-CSI-RS-ResourceSet is transmitted through a different Tx beam.

In other words, when reportQuantity of the CSI-RS reportConfig IE is configured as 'ssb-Index-RSRP', a terminal reports the best SSBRI and corresponding L1-RSRP to a base station.

In addition, when a CSI-RS resource may be configured in the same OFDM symbol(s) as an SSB(SS/PBCH Block) and 'QCL-TypeD' is applicable, the terminal may assume that a CSI-RS and an SSB are quasi co-located with regard to 'QCL-TypeD'.

Here, the QCL TypeD may mean that antenna ports are quasi-colocated with regard to a spatial Rx parameter. When a terminal receives a plurality of DL antenna ports in a QCL Type D relationship, it is allowed to apply the same Rx beam. In addition, a terminal does not expect that a CSI-RS will be configured in a RE overlapped with a RE of an SSB.

FIG. 9 is a diagram which illustrates a downlink beam management operation using CSI-RS in a wireless communication system to which the present disclosure may be applied.

FIG. 9(a) represents a Rx beam determination (or refinement) procedure of a terminal and FIG. 9(b) represents a Tx beam sweeping procedure of a base station. In addition, FIG. 9(a) is a case when a repetition parameter is configured as 'ON' and FIG. 9(b) is a case when a repetition parameter is configured as 'OFF'.

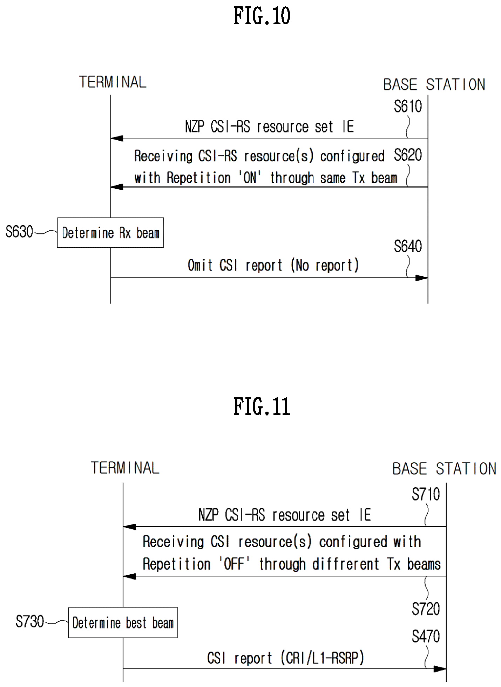

FIG. 10 is a diagram which illustrates an Rx beam determination process of a terminal in a wireless communication system to which the present disclosure may be applied.

In reference to FIG. 9(a) and FIG. 10, an Rx beam determination process of a terminal is described.

A terminal receives NZP CSI-RS resource set IE including a higher layer parameter repetition through RRC signaling from a base station (S610). Here, the repetition parameter is configured as 'ON'.

A terminal repetitively receives resources in a CSI-RS resource set configured as repetition 'ON' through the same Tx beam (or DL spatial domain transmission filter) of a base station in a different OFDM symbol (S620).

A terminal determines its Rx beam (S630).

A terminal omits a CSI report (S640). In this case, reportQuantity of a CSI report configuration may be configured as 'No report (or None)'.

In other words, the terminal may omit a CSI report when it is configured as repetition 'ON'.

FIG. 11 is a diagram which illustrates a Tx beam determination process of a base station in a wireless communication system to which the present disclosure may be applied.

In reference to FIG. 9(b) and FIG. 11, a Tx beam determination process of a base station is described.

A terminal receives NZP CSI-RS resource set IE including a higher layer parameter repetition through RRC signaling from a base station (S710). Here, the repetition parameter is configured as 'OFF' and it is related to a Tx beam sweeping procedure of a base station.

A terminal receives resources in a CSI-RS resource set configured as repetition 'OFF' through a different Tx beam (or DL spatial domain transmission filter) of a base station (S720).

A terminal selects (or determines) the best beam (S740).

A terminal reports an ID and related quality information (e.g., L1-RSRP) of a selected beam to a base station (S740). In this case, reportQuantity of a CSI report configuration may be configured as 'CRI + L1-RSRP'.

In other words, when a CSI-RS is transmitted for BM, the terminal reports a CRI and a related L1-RSRP.

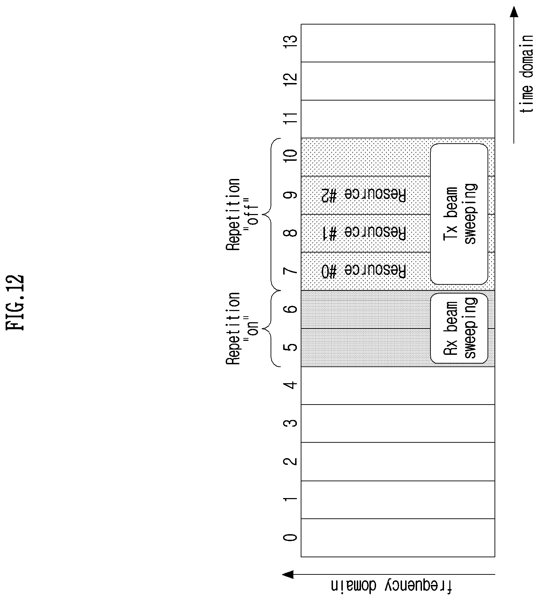

FIG. 12 is a diagram which illustrates resource allocation in a time and frequency domain related to a downlink beam management operation in a wireless communication system to which the present disclosure may be applied.

In reference to FIG. 12, it is shown that when repetition 'ON' is configured in a CSI-RS resource set, a plurality of CSI-RS resources are repetitively used by applying the same Tx beam and when repetition 'OFF' is configured in a CSI-RS resource set, different CSI-RS resources are transmitted in a different Tx beam.

Hereinafter, a beam indication method related to downlink BM will be described.

A terminal may be configured by RRC with a list of a maximum M candidate transmission configuration indication (TCI) states at least for a purpose of a QCL(Quasi Co-location) indication. Here, M may be 64.

Each TCI state may be configured as one RS set. Each ID of a DL RS at least for a spatial QCL purpose (QCL Type D) in a RS set may refer to one of DL RS types such as an SSB, a P(periodic)-CSI RS, an SP(semi-persistent)-CSI RS, an A(aperiodic)-CSI RS, etc.

An ID of DL RS(s) in a RS set used at least for a purpose of a spatial QCL may be initialized/updated at least by explicit signaling.

Table 7 illustrates a TCI-State information element (IE).

A TCI-State IE is associated with a quasi co-location (QCL) type corresponding to one or two DL reference signals (RS).

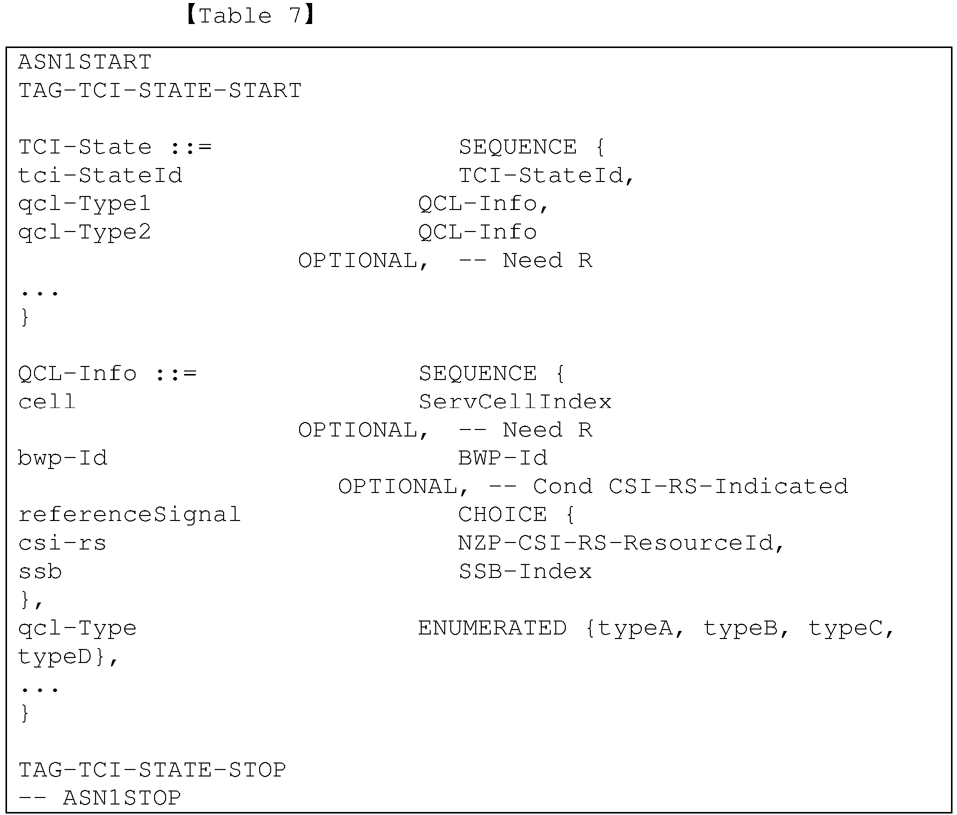

In Table 7, a bwp-Id parameter represents a DL BWP (bandwidth part) where an RS is located, a cell parameter represents a carrier where a RS is located and a referencesignal parameter represents reference antenna port(s) which is a source of a quasi co-location for corresponding target antenna port(s) or a reference signal including it. The target antenna port(s) may be a CSI-RS, a PDCCH DMRS, or a PDSCH DMRS. In an example, a corresponding TCI state ID(identifier) may be indicated in NZP CSI-RS resource configuration information to indicate QCL reference RS information for a NZP(non-zero power) CSI-RS. In another example, a TCI state ID may be indicated to each CORESET configuration to indicate QCL reference information for PDCCH DMRS antenna port(s). In another example, a TCI state ID may be indicated through DCI to indicate QCL reference information for PDSCH DMRS antenna port(s).

### UE-initiated beam reporting method

In the current NR standard, beam reporting is supported as one form of CSI feedback in which a UE reports, to a base station, a value of L1-RSRP or L1-SINR based on measurement power of an SSB or CSI-RS. Here, the base station configures and informs the UE, in advance, of UL resources and configuration for beam reporting, and the UE reports a beam to the base station according to the corresponding configuration.

A part of the work item description (WID) of Rel-19 NR MIMO is as follows.

Assuming unified transmission configuration indication (TCI), enhancements are specified to utilize the legacy CSI measurement and reporting configuration framework (as much as possible), target FR2 and single transmission reception point (sTRP) through intra-cell and inter-cell beam management, and facilitate UE-initiated/event-driven beam management in order to reduce overhead and/or latency.
- UL signaling content(s) (and procedure(s), if necessary) for UE-initiated/event-driven beam reporting that facilitates fast beam switching
- UL signal medium/container considering the UE-initiated/event-driven characteristics of UL transmission designed primarily for the purpose of beam reporting

As such, in Rel-19, unlike the existing approach, a scheme is being considered in which a specific event for beam reporting is defined, and a UE determines whether the event has occurred and performs beam reporting only when the event has occurred, and this may be referred to as UE-initiated beam reporting or event-driven beam reporting. Hereinafter, in the description of the present disclosure, for convenience of explanation, this will mainly be referred to as UE-initiated beam reporting, but the proposed method of the present disclosure is not limited to this designation and may be referred to by another designation.

Hereinafter, in the description of the present disclosure, beam reporting may be interpreted as a concept included in CSI reporting (or one type of CSI reporting), and therefore configuration for beam reporting may be configured for the UE by higher layer signaling for CSI reporting configuration. In addition, beam reporting may include L1-RSRP reporting and/or L1-SINR reporting. A beam reporting quantity may refer to information reported to the base station through beam reporting, and may include, for example, i) ID(s)/index(es) of a downlink reference signal (for example, channel state information-reference signal resource indicator (CRI), synchronization signal block (SSB) index), and ii) corresponding L1-RSRP or L1-SINR.

In addition, in the following description of the present disclosure, the proposed method is mainly described with respect to beam reporting, but the proposed method may be equally applied to other CSI reporting (for example, reporting of CRI, rank indicator (RI), precoding matrix indicator (PMI), channel quality indicator (CQI), and the like). In other words, when UE-initiated CSI reporting is supported in addition to UE-initiated beam reporting, the proposed method described below may be equally applied.

Hereinafter, the present disclosure proposes a UE-initiated beam reporting method.

Embodiment 1: A UE may transmit a CSI reporting configuration identifier (ID) in UE-initiated beam reporting.

Table 9 illustrates CSI reporting configuration defined in 3GPP TS 38.331.

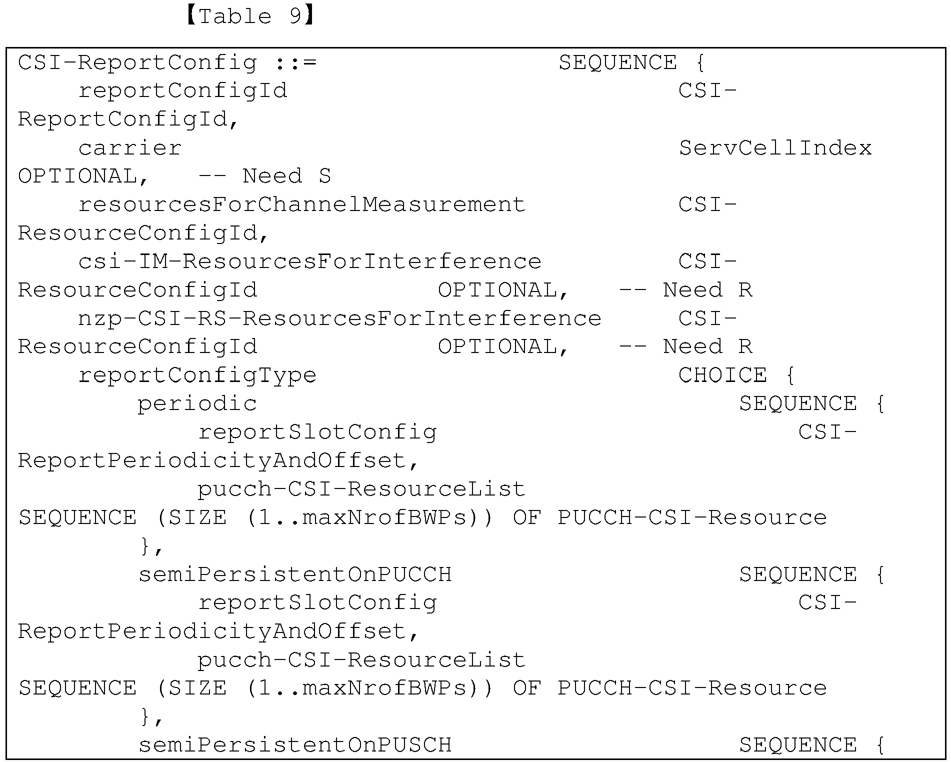

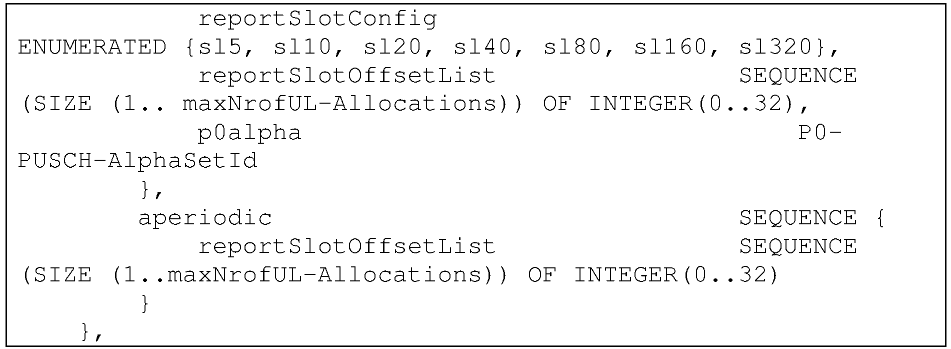

Referring to Table 9, a CSI report configuration ID (CSI report config ID) is configured for each CSI report, and it is configured as to which type the corresponding CSI report is reported as (for example, periodic CSI (P-CSI), semi-persistent CSI (SP-CSI) on PUCCH, SP-CSI on PUSCH, or aperiodic CSI (AP-CSI)).

In addition thereto, in the case of UE-initiated beam reporting, an RRC parameter may be additionally configured as shown in Table 10 below.

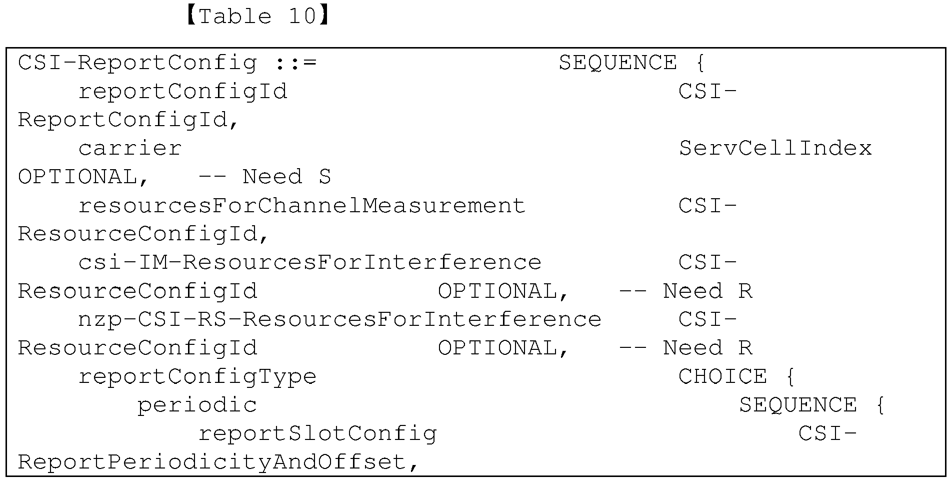

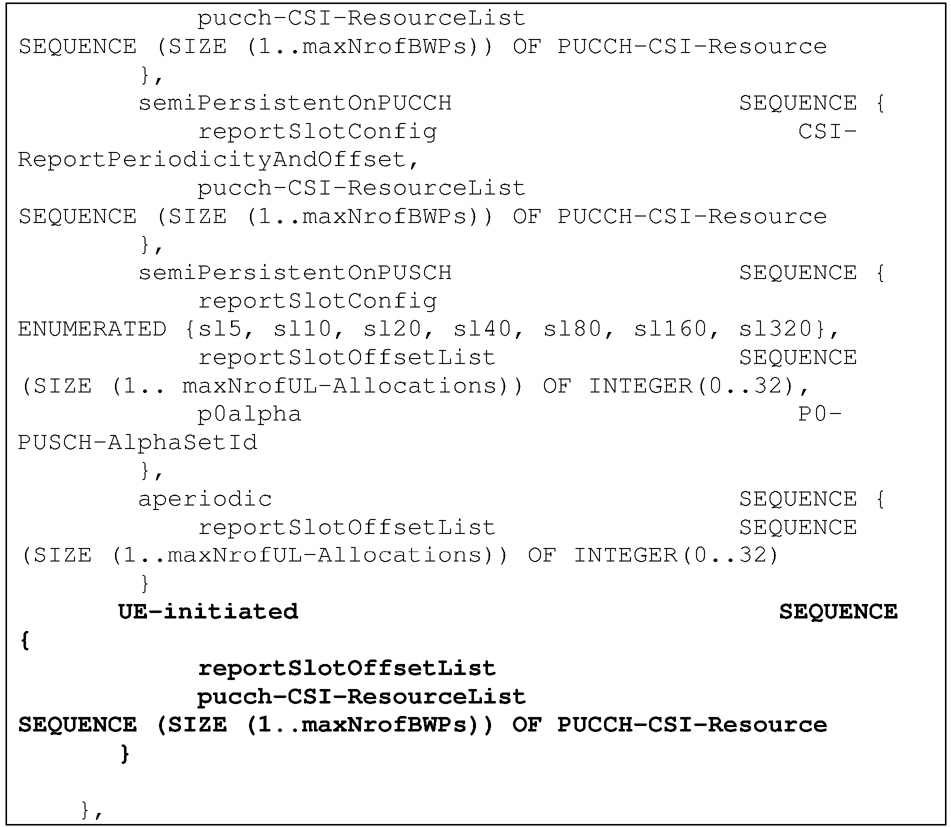

Referring to Table 10, an RRC parameter (for example, reportSlotOffsetList) for configuring timing for UE-initiated beam reporting and an RRC parameter (for example, pucch-CSI-ResourceList) for configuring a PUCCH resource through which UE-initiated beam reporting is transmitted may be additionally configured.

The base station may configure, for the UE, one or more CSI report configurations for which a report configuration type is configured as UE-initiated, and different events may be configured for respective CSI reports (that is, for respective CSI report configurations). Alternatively, a common event may be configured for all CSI reports (that is, CSI report configurations). Alternatively, a common event may be configured for each of some groups among all CSI reports (that is, CSI report configurations).

For example, the base station may configure, for the UE through RRC signaling, CSI report configurations 1, 2, and 3 for UE-initiated beam reporting (that is, CSI report config ID = 1, 2, and 3). In addition, specific CSI report(s) may be activated through dynamic signaling such as MAC control element (MAC CE) or downlink control information (DCI) by the base station. Alternatively, CSI reports may be activated by the RRC configuration itself (that is, only by the RRC configuration) without separate activation by the base station. The UE may monitor (or measure) an event condition for each activated CSI report. When an event condition for a specific CSI report is satisfied, the UE may perform beam reporting for the corresponding CSI report. For example, a beam reporting quantity (or beam report) may include i) ID(s)/index(es) of downlink reference signal(s) preferred by the UE (for example, CRI, SSB index), and ii) corresponding L1-RSRP or L1-SINR.

Here, the UE may report a CSI report configuration ID to the base station in order to report (or indicate) for which CSI report the beam reporting is performed. For example, the CSI report configuration ID may be reported together with the beam reporting quantity (for example, CRI, SSB index, L1-RSRP, or L1-SINR), or may be separately reported before reporting the beam reporting quantity.

Embodiment 2: The UE may transmit, to the base station, a beam reporting quantity (for example, i) downlink reference signal ID(s)/index(es) (CRI, SSB index, and the like), and ii) L1-RSRP or L1-SINR) through an uplink channel (for example, PUCCH or PUSCH) for UE-initiated beam reporting.

Here, the uplink channel for UE-initiated beam reporting may be secured/configured in advance from the base station.
- For example, that the uplink channel for UE-initiated beam reporting is secured/configured in advance from the base station may mean a case in which the UE can use the corresponding uplink channel as needed, such as a configured grant (CG) PUSCH or a scheduling request (SR) PUCCH. Alternatively, this may mean a case in which the UE can use the corresponding uplink channel as needed in a state in which periodic (P) or semi-persistent (SP) PUCCH resources are periodically or semi-persistently allocated.

In this case, the UE may perform UE-initiated beam reporting to the base station through a CG PUSCH, an SR PUCCH, or a P/SP PUCCH for a CSI report for which an event condition is satisfied. In other words, the UE may transmit the beam reporting quantity to the base station through the CG PUSCH, the SR PUCCH, or the P/SP PUCCH for the CSI report for which the event condition is satisfied.
- Alternatively, as another example, that the uplink channel for UE-initiated beam reporting is secured/configured in advance from the base station may mean a case in which the UE requests, from the base station, an uplink channel for UE-initiated beam reporting, and an uplink PUSCH is configured/allocated through DCI for uplink scheduling.

Here, SR (scheduling request) PUCCH transmission may be used for requesting the uplink channel. That is, the UE may request, from the base station, a UL channel for UE-initiated beam reporting by using an SR PUCCH for a CSI report for which an event condition is satisfied. For example, while a legacy SR PUCCH indicates only whether there is a scheduling request for an uplink transport block (TB), the SR PUCCH for UE-initiated beam reporting according to the present disclosure may additionally need to indicate whether there is a scheduling request for beam reporting. For this purpose, the base station may configure, for the UE, whether the SR PUCCH is for i) a scheduling request for a TB, ii) a scheduling request for beam reporting, or iii) a scheduling request for both the TB and beam reporting. Here, when the corresponding SR PUCCH is for both the TB and beam reporting (BR), the UE may request, to the base station, by distinguishing four cases using 2-bit information: i) TB+BR, ii) TB, iii) BR, and iv) none.

Meanwhile, the operation of Embodiment 1 described above and the operation of Embodiment 2 may be applied together, and accordingly, when the uplink channel for UE-initiated beam reporting is secured/configured in advance from the base station, the UE may transmit the CSI report configuration ID together with the beam reporting quantity (for example, i) downlink reference signal ID(s)/index(es) (CRI, SSB index, and the like), and ii) L1-RSRP or L1-SINR).

Here, an encoding order of the CSI report configuration ID may be located before or after the beam reporting quantity. For example, since the CSI report configuration ID is information that needs to be first known before interpretation of the beam reporting quantity, locating the CSI report configuration ID before the beam reporting quantity may be advantageous for decoding implementation at the receiving side and for a bit sequence parsing scheme. Alternatively, by locating the CSI report configuration ID after the beam reporting quantity, the transmitting side may utilize an existing legacy bit sequence concatenation implementation and may only additionally append the CSI report configuration ID at the end.

The CSI may be configured to include part 1 CSI and part 2 CSI, and the CSI report configuration ID may be configured to be included in the part 1 CSI.

In an existing beam reporting procedure, the beam reporting quantity is configured as part 1 CSI. However, in the case of UE-initiated beam reporting according to the present disclosure, since the beam reporting quantity and a payload size of the beam reporting quantity may vary depending on the CSI report configuration, in this case, the beam reporting quantity may be configured to be included in part 2 CSI.

Alternatively, in order to prevent the beam reporting quantity and the payload size of the beam reporting quantity from varying according to the CSI report configuration, the UE may expect that the beam reporting quantity and the payload size of the beam reporting quantity of CSI report configurations for UE-initiated beam reporting are configured to be identical (that is, may be configured identically). For this purpose, the UE may expect that the number of CSI-RSs/SSBs corresponding to channel measurement resources (CMRs), which are subject to channel measurement for each CSI report configuration, and a report quantity are configured to be identical (that is, may be configured identically).

As another example, in the CSI report configuration ID/beam reporting quantity reporting of the UE, beam reporting for a plurality of CSI report configurations may be performed together. In this case, the UE may perform reporting by placing, at the front of the report payload, the CSI report configuration ID/beam reporting quantity for a specific CSI report configuration including the CRI (or SSB index) having the best quality (for example, having the highest L1-RSRP/SINR value). Here, the L1-RSRP/SINR value related/associated with the CRI (or SSB index) having the best quality within the corresponding specific CSI report configuration may be reported as an absolute value (for example, represented by 7 bits). Further, L1-RSRP/SINR values related/associated with other CRIs (or SSB indices) within the corresponding specific CSI report configuration, or related/associated with CRIs (or SSB indices) related to CSI report configurations other than the corresponding specific CSI report configuration, may be reported as differential values (for example, represented by 4 bits).

For example, it is assumed that CSI report configurations 1, 2, and 3 are configured, and CRIs 1 and 2, CRIs 3 and 4, and CRIs 5 and 6 are configured within each CSI report configuration, respectively. Here, if CRI 4 within CSI report configuration 2 is measured with the highest L1-RSRP/SINR value, CSI report configuration 2 is located first within the report payload, and the L1-RSRP/SINR value related/associated with CRI 4 may be reported as an absolute value (for example, represented by 7 bits), while L1-RSRP/SINR values related/associated with the remaining CRIs may be reported as differential values (for example, represented by 4 bits). Through the corresponding operation, as the number of bits representing the L1-RSRP/SINR value for each CRI is reduced, the CSI report payload may be saved.

Further, in the above-described example, the number of bits representing the CRI may be determined by i) performing local indexing (dedicated to each CSI report configuration) based on the number of CRIs within each CSI report among the plurality of CSI report configurations, or ii) performing local indexing (across the plurality of CSI report configurations) based on the total number of CRIs included in the plurality of CSI report configurations.

With respect to the local indexing, method i is a method considering determination of the number of bits representing the CRI in each report configuration, similar to deriving the CRI for each sub-configuration in network energy saving (NES), and method ii is a method considering determination of the number of bits representing the CRI from the total number of CRIs in the plurality of CSI report configurations. For example, it is assumed that CSI report configurations #1, #2, and #3 respectively include 2, 3, and 3 CMRs. In this case, in method i, by considering the number of CRIs included in each report configuration (= the number of CSI-RS or SSB candidates selectable as the CRI), 1 bit, 2 bits, and 2 bits may respectively be required for CRI representation of report configurations #1, #2, and #3. In method ii, 3 bits may be required by considering the total number of CRIs of all report configurations. Here, in method i, the CSI report configuration ID should be included in the report content for CRI representation for each CSI report configuration, whereas in method ii, the CSI report configuration ID need not be included.

Embodiment 3: After uplink transmission related to UE-initiated beam reporting, the UE may transmit, to the base station, a beam reporting quantity (for example, i) downlink reference signal ID(s)/index(es) (CRI, SSB index, etc.), and ii) L1-RSRP or L1-SINR) through an uplink channel (for example, PUCCH or PUSCH) for UE-initiated beam reporting.

For example, the uplink transmission related to UE-initiated beam reporting may correspond to uplink transmission for requesting, from the base station, an uplink channel (or uplink channel resources) for UE-initiated beam reporting.

For this purpose, SR (scheduling request) PUCCH transmission may be utilized. That is, the UE may request, from the base station, a UL channel for UE-initiated beam reporting by using an SR PUCCH for a CSI report satisfying the event condition.

Further, the operation of Embodiment 1 described above and the operation of Embodiment 2 may be applied together, and when the UE requests, from the base station, an uplink channel for UE-initiated beam reporting, the CSI report configuration ID may be reported through a request message before reporting of the beam reporting quantity.

For example, when a legacy scheme is used, since information that can be carried on the SR PUCCH is up to 2 bits, an uplink channel (or uplink channel resources) for one among up to four CSI report configuration IDs may be requested through the SR PUCCH. Alternatively, RACH (random access channel) transmission may be used for requesting the uplink channel. In this case, a CSI report configuration ID may be one-to-one mapped to a specific SSB index, or the CSI report configuration ID may be included in a RACH message.

And/or, when a legacy scheme is used, since information that can be carried on the SR PUCCH is up to 2 bits, when up to four CMRs exist within a specific CSI report configuration (or a CMR set related thereto) for UE-initiated beam reporting, reporting indicating that one among the up to four CMRs has a good L1-RSRP/SINR value may be performed only by SR-PUCCH transmission. That is, rather than transmitting a specific CSI report configuration ID through the SR PUCCH, a specific CMR within a specific CSI report configuration may be reported (for example, through a CRI). In this case, i) beam reporting including the L1-RSRP/SINR value of the CRI reported through the corresponding SR-PUCCH may be subsequently reported through scheduled PUSCH transmission, or ii) PUSCH transmission related to CSI reporting may be omitted without any subsequent reporting.

As another example, when the UE determines a UL channel/resource for UE-initiated beam reporting and notifies the base station thereof, the CSI report configuration ID may be included and reported in a notification message before reporting of the beam reporting quantity. That is, when an event occurs, the UE may include and report the CSI report configuration ID in the corresponding notification message, and thereafter the UE may report, on uplink resources indicated by the notification message, the beam reporting quantity corresponding to the CSI report configuration ID. Such a notification message may, for example, be transmitted by using a CG PUSCH, and may include CSI report configuration ID information and CSI reporting time information (for example, slot, starting symbol, or time duration). For example, through the CSI report configuration ID in the notification message, a PUCCH resource configured within the corresponding CSI report configuration (see Table 9) may be identified, and through CSI reporting time information (see Embodiment 4 to be described later), transmission slot information of the PUCCH resource may be identified. Here, since starting symbol, symbol duration, and resource block (RB) information for the PUCCH resource are configured in advance, the base station and the UE (for example, UE A) may know UL frequency-time resource information. When the PUCCH resource collides with a PUSCH resource already configured by the base station for another UE (for example, UE B), the base station may notify UE B of cancellation of the corresponding PUSCH resource through a cancellation indication. Further, in order to prevent in advance collision with an uplink channel allocated to another UE, the base station may inform UE A in advance of resource information on which uplink transmission is not possible, and UE A may determine UL resources while avoiding the corresponding resources.

As another example, the uplink transmission related to UE-initiated beam reporting may correspond to uplink transmission for informing the base station that an event has occurred (has been satisfied). In this case, whether to schedule an uplink channel for UE-initiated beam reporting may be determined autonomously by the base station.

Thereafter, the UE may transmit, to the base station, a beam reporting quantity (for example, i) downlink reference signal ID(s)/index(es) (CRI, SSB index, etc.), ii) L1-RSRP or L1-SINR) through an uplink channel (for example, PUCCH, PUSCH) for UE-initiated beam reporting.

Here, based on the operation of Embodiment 2 and the operation of Embodiment 3 being applied together, the UE may transmit, to the base station, uplink transmission for informing that an event related to UE-initiated beam reporting has occurred (has been satisfied), and the UE may transmit, to the base station, a beam reporting quantity (for example, i) downlink reference signal ID(s)/index(es) (CRI, SSB index, etc.), ii) L1-RSRP or L1-SINR) through an uplink channel secured/configured in advance.

Meanwhile, in Embodiments 1 to 3 described above, a scheme in which different CSI report configurations are configured for the UE for respective beam reports has mainly been described. However, differently therefrom, beam reports may be defined/configured within a single CSI report configuration. In this case, the beam reports share one CSI report configuration ID, and the beam reports may be distinguished as sub-configurations are configured within the CSI report configuration. For example, beam reports 1, 2, and 3 may be configured by configuring sub-configurations 1, 2, and 3, and for each sub-configuration, an independent CMR (and/or interference measurement resource (IMR)) and an event condition may be configured. For example, such sub-configurations may be configured in the form of CMR (and/or IMR) sets. In this case, CMRs corresponding to beam reports 1, 2, and 3 may be configured by configuring CMR sets 1, 2, and 3 within the CSI report configuration. In such a structure, the UE may inform the base station as to which beam report is being reported by reporting a sub-configuration ID or a CMR (and/or IMR) set ID instead of the CSI report configuration ID in Embodiments 1 to 3 described above.

In other words, when a sub-configuration ID or a CMR (and/or IMR) set ID is introduced, Embodiments 1 to 3 may be applied by replacing the CSI report configuration ID with the sub-configuration ID or the CMR (and/or IMR) set ID.

Further, in Embodiments 1 to 3 described above, the reporting scheme of the CSI report configuration ID may also be applied to event ID reporting. That is, a plurality of events related to UE-initiated beam reporting may be configured for the UE, and during UE-initiated beam reporting, the UE may report, to the base station, as to which event the beam reporting corresponds.

For example, when a plurality of different events are defined within the same CSI resource configuration and CSI report configuration, an event ID may be defined for each event. The UE may report, to the base station, which event is satisfied for the UE-initiated beam reporting to be reported. For example, event 1 may be defined as reporting a beam for which the RSRP exceeds 20 dB with respect to a CMR for UE-initiated beam reporting, and event 2 may be defined as reporting a beam for which reception power exceeds, by 10 dB, a beam currently used for DL/UL reception with respect to the CMR for UE-initiated beam reporting. In this case, the UE may additionally report, to the base station, by which event the beam reporting is performed.

Meanwhile, in Embodiments 1 to 3 described above, an ID may be interpreted as having the same meaning as an index.

Further, in Embodiments 1 to 3 described above, the reporting scheme of the CSI report configuration ID may also be applied in the same manner for reporting of a CRI/SSB index. For example, when one CSI report for UE-initiated beam reporting is configured, the UE need not report the CSI report configuration ID, and instead may utilize the schemes of Embodiments 1 to 3 described above in order to report the CRI/SSB index among quantities of the corresponding CSI report.

Embodiment 4: A beam reporting time (that is, CSI reporting time) for UE-initiated beam reporting may be determined by the UE/base station.

Here, the beam reporting time (that is, CSI reporting time) for UE-initiated beam reporting may be determined as an offset from a time point of uplink transmission for (UE-initiated) beam reporting.

When the UE transmits, to the base station, uplink transmission for (UE initiated) beam reporting (for example, requesting uplink scheduling) and/or when the UE determines an uplink channel/resource for (UE initiated) beam reporting and notifies the base station thereof, the UE may report CSI reporting time information to the base station. For example, the CSI reporting time information may be reported by applying the transmission scheme of the CSI report configuration ID in Embodiment 3.

With respect to Embodiment 3 described above, when transmitting, to the base station, uplink transmission for (UE initiated) beam reporting (for example, requesting uplink scheduling), the UE may transmit reporting time information for the corresponding beam reporting by including the same in the uplink transmission.

The reporting time information may be information regarding a time point at which the UE performs beam reporting (for example, slot, starting symbol, symbol time duration, etc.), and in this case, the UE may autonomously determine the reporting time and report the same to the base station. Further, the reporting time may be represented as an offset based on a request time, as will be described later.

Alternatively, the reporting time information may indicate a time duration during which beam reporting is to be performed. The UE may predict a time duration during which the corresponding beam reporting does not become outdated (or during which the beam reporting is valid/meaningful) in consideration of time variation of the channel, and the base station may perform uplink scheduling such that beam reporting may be performed within the corresponding time duration. For example, the reporting time information may be configured as an offset with respect to a request time (that is, a transmission time point of uplink transmission for (UE initiated) beam reporting). In this case, assuming that the request time (that is, the transmission time point of uplink transmission for (UE initiated) beam reporting) is slot n, by reporting an offset k, the base station may perform uplink scheduling such that beam reporting is performed within slot n+k (that is, at slot n+k or earlier). If the base station performs uplink scheduling such that beam reporting is performed after slot n+k, the UE may ignore the corresponding scheduling, or even if the UE performs beam reporting according to the corresponding scheduling, validity of the corresponding beam information may not be guaranteed. Alternatively, the UE may expect that the base station performs uplink scheduling such that beam reporting is performed within slot n+k (or, the UE may not expect that the base station performs uplink scheduling such that beam reporting is performed after slot n+k).

For the offset k, offset candidate values may be configured by the base station for the UE, like a report slot offset list (for example, reportSlotOffsetList) exemplified in Table 9, and the UE may determine k as one of the values and report the same to the base station.

Further, with respect to Embodiment 2 described above, when the UE determines an uplink channel/resource for (UE initiated) beam reporting and notifies the base station thereof, the reporting time information may be a time point at which the UE performs beam reporting (for example, slot, starting symbol, symbol time duration, etc.). In this case, the UE may autonomously determine the reporting time and report the same to the base station. Further, the reporting time may be represented as an offset based on a request time (that is, the transmission time point of uplink transmission for (UE initiated) beam reporting), as described above.

Further, the reporting time may be interpreted as a "validity time of an event," which may be determined not only by time variation of the channel but also by a measurement window/method (for example, whether L3 filtering is applied). In consideration thereof, in addition to a method in which the UE reports the reporting time, the reporting time may be predefined (in the standard) or configured by the base station.

Also in this case, as described above, for example, the reporting time may be configured as an offset with respect to a transmission time point of uplink transmission for UE initiated beam reporting. For example, the offset k may be configured by the base station for the UE as offset candidate values are configured as one value, like a report slot offset list (for example, reportSlotOffsetList) exemplified in Table 9.

In addition, the reporting time may be predefined (in the standard) or configured by the base station for each event (or for each event type).

Embodiment 5: Counting method for the number of activated (active) CSI-RS resources and the number of activated ports of NZP CSI-RS configured for UE initiated beam reporting

Table 10 is currently described as follows in Section 5.2.1.6 of TS 38.214.

**[Table 10]**

| |
|---|
| In any slot, the UE is not expected to have more active CSI-RS ports or active CSI-RS resources in active BWPs than reported as capability. NZP CSI-RS resource is active in a duration of time defined as follows. For aperiodic CSI-RS, starting from the end of the PDCCH containing the request and ending at the end of the scheduled PUSCH containing the report associated with this aperiodic CSI-RS. When the PDCCH candidates are associated with a search space set configured with searchSpaceLinkingId, for the purpose of determining the NZP CSI-RS resource active duration, the PDCCH candidate that ends later in time among the two linked PDCCH candidates is used. For semi-persistent CSI-RS, starting from the end of when the activation command is applied, and ending at the end of when the deactivation command is applied. For periodic CSI-RS, starting when the periodic CSI-RS is configured by |
| higher layer signalling, and ending when the periodic CSI-RS configuration is released. |
| If a CSI-RS resource is referred N times by one or more CSI Reporting Settings, the CSI-RS resource and the CSI-RS ports within the CSI-RS resource are counted N times. |
| For a CSI-RS Resource Set for channel measurement configured with two Resource Groups and *N* Resource Pairs, if a CSI-RS resource is referred *X* times by one of the *M* CSI-RS resources, where *M* is defined in clause 5.2.1.4.2, and/or one or two Resource Pairs, the CSI-RS resource and the CSI-RS ports within the CSI-RS resource are counted *X* times. |
| For a CSI-RS Resource Set for channel measurement configured with two Resource Groups and *N* Resource Pairs, if a CSI-RS resource is referred *X* times by one of the M CSI-RS resources (where *M* is defined in clause 5.2.1.4.2), and/or one or two Resource Pairs, the CSI-RS resource and the CSI-RS ports within the CSI-RS resource are counted *X* times. |
| For a CSI report configuration containing sub-configuration(s) indicated in a CSI-ReportConfig, if a CSI-RS resource is referred by M sub-configurations among X sub-configurations, the CSI-RS resource is counted M times. |

The UE may count NZP CSI-RS resources of a CSI report configured for UE initiated beam reporting as activated resources from a moment at which the corresponding CSI report is activated to a moment at which the same is deactivated, and may count the number of ports of the corresponding resources as the number of activated ports.

For example, the base station may RRC-configure CSI report configurations 1, 2, and 3 (that is, CSI report configuration IDs = 1, 2, and 3) for UE initiated beam reporting for the UE, and may activate specific CSI report(s) through dynamic signaling such as MAC-CE/DCI (or, RRC configuration itself may be used/regarded as activation without a separate activation indication). The UE may count CSI-RS resources/ports configured in each activated CSI report as activated resources/ports until the same are deactivated through dynamic signaling such as MAC-CE/DCI or until RRC release is performed.

Here, since CSI report configurations 1, 2, and 3 described above are reported on an event basis unlike conventional CSI reporting, reporting may not be performed even if the same are activated. However, since the UE needs to measure the corresponding NZP CSI-RS in order to monitor an event condition, the UE may count the corresponding NZP CSI-RS as activated resources/ports regardless of whether reporting is performed.

In consideration of such an operational difference, activated CSI-RS resources/ports for UE initiated beam reporting may be individually counted separately from conventional activated CSI-RS resources/ports. Accordingly, when reporting UE capability, the UE may separately distinguish and report, to the base station, the existing maximum number of supported activated CSI-RS resources/ports and the maximum number of activated CSI-RS resources/ports supportable for UE initiated beam reporting.

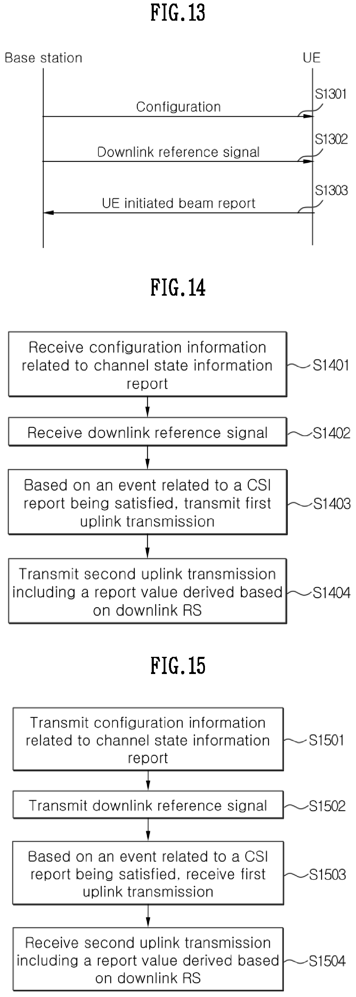

FIG. 13 is a diagram illustrating a signaling procedure between a base station and a UE for a UE initiation beam reporting method according to one embodiment of the present disclosure.

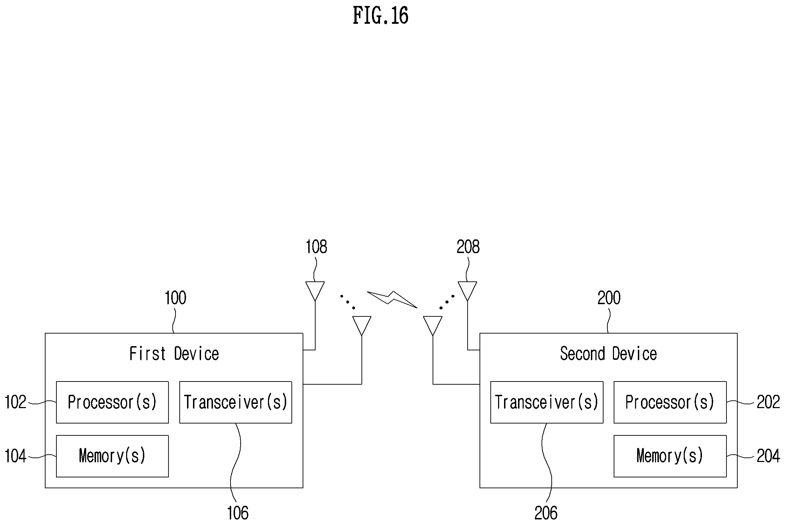

FIG. 13 exemplifies a signaling procedure between the UE and the base station based on the proposed methods in Embodiments 1 to 5 described above. The example of FIG. 13 is for convenience of description and does not limit the scope of the present disclosure. Some step(s) exemplified in FIG. 13 may be omitted depending on circumstances and/or configuration. Further, in FIG. 13, the base station and the UE are merely one example and may be implemented by the apparatus exemplified in FIG. 16 below. For example, the processor (102/202) of FIG. 16 may control transmission/reception of a channel/signal/data/information and the like by using the transceiver (106/206), and may also control storage of a channel/signal/data/information and the like to be transmitted or received in the memory (104/204).

Referring to FIG. 13, the base station transmits configuration information to the UE (S1301).

Here, the configuration information may mean configuration information related to UE-initiated beam reporting or event-drived beam reporting.

Here, a beam (or beam RS or RS) may mean a beamformed RS (for example, SSB, CSI-RS, etc.). Further, a beam (or beam RS or RS) may have different directivities for respective transmitted resources, and different resource(s) through which the beamformed RS is transmitted may mean different beam(s) (or beam RS or RS).

Further, the configuration information may mean configuration information regarding one or more parameter(s) related to a Tx beam (or beam RS or RS) of the base station and/or an Rx beam (or beam RS or RS) of the UE. For example, the configuration information may be configuration information related to beam (or CSI) reporting (for example, configuration information related to reporting of CSI (for example, CSI-ReportConfig including (L1-RSRP and/or L1-SINR))), configuration information related to resources for beam (or CSI) reporting (for example, CSI-ResourceConfig), or configuration information related to beam configuration for a specific channel/signal, BWP, serving cell, and the like (for example, configuration information including (DL/UL or unified) TCI state(s)).

Further, the configuration information may include information regarding an event (or determination criterion) for determining whether the UE performs initiated/event-drived beam reporting. Such event(s) (or determination criterion/criteria) may be configured one for each CSI report, or may be configured as a plurality thereof within one CSI report.

Although not illustrated in FIG. 13, the base station may transmit control information to the UE.

Here, control information may mean information for activating and/or directing a beam (or beam RS or RS) (i.e., QCL type-D RS (or TCI state)). Alternativley, it may mean control information for activating/triggering a beam report (e.g., L1-RSRP/SINR) to assist in the selection of the base station's Tx beam (or beam RS or RS) and/or the UE's Rx beam (or beam RS or RS). Such control information may be transmitted via MAC CE, may be transmitted via DCI, or may be transmitted via MAC CE and DCI.

The base station transmits a downlink reference signal (i.e., a beam) (e.g., SSB, CSI-RS, etc.) to the UE (S1302).

As described above, a beam (or beam RS or RS) may refer to a beam-formed reference signal (e.g., SSB, CSI-RS, etc.). Additionally, a beam (or beam RS or RS) may have different directions depending on the resource being transmitted, and the different resource(s) to which the beam-formed RS is transmitted may refer to different beams (or beam RS or RS).

That is, the base station may transmit downlink RS to the UE through different beams on one or more downlink RS resources.

The UE performs a UE-initiated/event-driven beam report to the base station (S1303).

Here, a UE-initiated/event-driven beam report may be performed when an event configured by the configuration information is satisfied.

Herein, based on the satisfaction of an event associated with an initiated/event-driven beam report, the UE may transmit a first uplink transmission to the base station, and subsequently, the UE may transmit a second uplink transmission to the base station containing a report value derived based on a downlink reference signal. Herein, the report value may be i) a pair of the identifier of the reference signal resource (e.g., CRI, SSBRI) and L1-RSRP, or ii) a pair of the identifier of the reference signal resource and L1-SNIR.

Herein, the first uplink transmission may be an uplink transmission notifying that the event has been satisfied. For example, the first uplink transmission may be transmitted via PUCCH. As another example, the notification that the event has been satisfied may apply a transmission method for a scheduling request (SR).

Additionally, the second uplink transmission may be performed via CG PUSCH.

Alternatively, the second uplink transmission may be performed via a PUSCH scheduled from the base station.

Additionally, based on a plurality of CSI reports being configured for the UE, the first uplink transmission or the second uplink transmission may include information indicating which of the plurality of CSI reports the report value is associated with.

Alternatively, based on multiple CSI reports being configured for the UE, the second uplink transmission may include multiple report values for the multiple CSI reports. In this case, for the multiple CSI reports, the highest report value may be positioned first, the highest report value may be reported as an absolute value, and the remaining report values may be reported as differential values for the highest report value.

In addition, based on multiple events being configured for the UE (e.g., for a single CSI report or for multiple CSI reports), the first uplink transmission or the second uplink transmission may include information indicating which of the multiple events the report value is associated with.

Additionally, the transmission time of the second uplink transmission may be determined as an offset from the transmission time of the first uplink transmission. For example, the transmission time of the second uplink transmission may be determined by the UE and included in the first uplink transmission. Alternatively, the transmission time of the second uplink transmission may be predefined or configured by a base station. For example, one or more offset candidates for the transmission time of the second uplink transmission may be configured for the UE, and the offset may be determined from the one or more offset candidates.

FIG. 14 is a diagram illustrating the operation of a UE for reporting channel state information according to one embodiment of the present disclosure.

FIG. 14 illustrates the operation of a UE based on the proposed methods in Embodiments 1 to 5 described above. The example in FIG. 14 is for convenience of explanation and is not intended to limit the scope of the disclosure. Some step(s) illustrated in FIG. 14 may be omitted depending on the situation and/or configuration. Also, the UE in FIG. 14 is merely an example and may be implemented as the device illustrated in FIG. 16 below. For example, the processor (102/202) of FIG. 16 may control the transmission and reception of channels/signals/data/information, etc. using a transceiver (106/206), and may also control the storage of channels/signals/data/information, etc. to be transmitted or received in memory (104/204).

Additionally, the operation of FIG. 14 may be processed by one or more processors (102, 202) of FIG. 16. Additionally, the operation of FIG. 14 may be stored in memory (e.g., one or more memory (104, 204) of FIG. 16) in the form of an instruction/program (e.g., instruction, executable code) for driving at least one processor (e.g., 102, 202) of FIG. 16.

Referring to FIG. 14, the UE receives configuration information related to a CSI report from the base station (S1401).

Here, the CSI report may include beam reports (e.g., L1-RSRP and/or L1-SINR), and the configuration information associated with the CSI report (e.g., CSI-ReportConfig) may correspond to one example of configuration information in FIG. 13.

Additionally, configuration information related to CSI reporting may include information about events (or criteria) for determining whether the UE will perform initiated/event-driven beam reporting. These events (or criteria) may be configured one per CSI report, or multiple within a single CSI report.

The UE receives a downlink RS on one or more reference signal (RS) resources from a base station (S1402).

As described above, a beam (or beam RS or RS) may refer to a beam-formed reference signal (e.g., SSB, CSI-RS, etc.). Additionally, a beam (or beam RS or RS) may have different directions depending on the resource being transmitted, and the different resource(s) to which the beam-formed RS is transmitted may refer to different beams (or beam RS or RS).

That is, downlink RS can be transmitted through different beams from one or more of the above RS resources.

For example, the downlink RS may correspond to either a synchronization signal block (SSB) or a CSI-RS.

Based on an event related to a CSI report being satisfied, the UE transmits a first uplink transmission to the base station (S1403).

In other words, when an event configured by the configuration information related to CSI reporting is satisfied, UE-initiated/event-driven beam reporting can be performed.

Herein, the first uplink transmission may be an uplink transmission notifying that the event has been satisfied. For example, the first uplink transmission may be transmitted via PUCCH. As another example, the notification that the event has been satisfied may apply a transmission method for a scheduling request (SR).

The UE transmits a second uplink transmission (i.e., a beam report or CSI report) including a report value derived (calculated) based on the downlink RS to the base station (S1404).

Here, the reported value may be i) a pair of the identifier of the reference signal resource (e.g., CRI, SSBRI) and L1-RSRP or ii) a pair of the identifier of the reference signal resource and L1-SNIR.

Here, the second uplink transmission may be performed via CG PUSCH.

Alternatively, the second uplink transmission may be performed via a PUSCH scheduled from the base station.

Additionally, based on a plurality of CSI reports being configured for the UE, the first uplink transmission or the second uplink transmission may include information indicating which of the plurality of CSI reports the report value is associated with.

Alternatively, based on multiple CSI reports being configured for the UE, the second uplink transmission may include multiple report values for the multiple CSI reports. In this case, for the multiple CSI reports, the highest report value may be positioned first, the highest report value may be reported as an absolute value, and the remaining report values may be reported as differential values for the highest report value.

In addition, based on multiple events being configured for the UE (e.g., for a single CSI report or for multiple CSI reports), the first uplink transmission or the second uplink transmission may include information indicating which of the multiple events the report value is associated with.

Additionally, the transmission time of the second uplink transmission may be determined as an offset from the transmission time of the first uplink transmission. For example, the transmission time of the second uplink transmission may be determined by the UE and included in the first uplink transmission. Alternatively, the transmission time of the second uplink transmission may be predefined or configured by a base station. For example, one or more offset candidates for the transmission time of the second uplink transmission may be configured for the UE, and the offset may be determined from the one or more offset candidates.

FIG. 15 is a diagram illustrating the operation of a base station for reporting channel state information according to one embodiment of the present disclosure.

FIG. 15 illustrates the operation of a base station based on the proposed methods in Embodiments 1 to 5 described above. The example in FIG. 15 is for convenience of explanation and is not intended to limit the scope of the disclosure. Some step(s) illustrated in FIG. 15 may be omitted depending on the situation and/or configuration. Also, the base station in FIG. 15 is merely an example and may be implemented as the device illustrated in FIG. 16 below. For example, the processor (102/202) of FIG. 16 may control the transmission and reception of channels/signals/data/information, etc. using a transceiver (106/206), and may also control the storage of channels/signals/data/information, etc. to be transmitted or received in memory (104/204).

Additionally, the operation of FIG. 15 may be processed by one or more processors (102, 202) of FIG. 16. Additionally, the operation of FIG. 15 may be stored in memory (e.g., one or more memory (104, 204) of FIG. 16) in the form of an instruction/program (e.g., instruction, executable code) for driving at least one processor (e.g., 102, 202) of FIG. 16.

Referring to Fig. 15, the base station transmits configuration information related to a CSI report to the UE (S1501).

Here, the CSI report may include beam reports (e.g., L1-RSRP and/or L1-SINR), and the configuration information associated with the CSI report (e.g., CSI-ReportConfig) may correspond to one example of configuration information in FIG. 13.

Additionally, configuration information related to CSI reporting may include information about events (or criteria) for determining whether the UE will perform initiated/event-driven beam reporting. These events (or criteria) may be configured one per CSI report, or multiple within a single CSI report.

The base station transmits a downlink RS on one or more reference signal (RS) resources to the UE (S1502).

As described above, a beam (or beam RS or RS) may refer to a beam-formed reference signal (e.g., SSB, CSI-RS, etc.). Additionally, a beam (or beam RS or RS) may have different directions depending on the resource being transmitted, and the different resource(s) to which the beam-formed RS is transmitted may refer to different beams (or beam RS or RS).

That is, downlink RS can be transmitted through different beams from one or more of the above RS resources.

For example, the downlink RS may correspond to either a synchronization signal block (SSB) or a CSI-RS.

Based on an event related to a CSI report being satisfied, the base station receives a first uplink transmission from the UE (S1503).

In other words, when an event configured by the configuration information related to CSI reporting is satisfied, UE-initiated/event-driven beam reporting can be performed.

Herein, the first uplink transmission may be an uplink transmission notifying that the event has been satisfied. For example, the first uplink transmission may be transmitted via PUCCH. As another example, the notification that the event has been satisfied may apply a transmission method for a scheduling request (SR).

The base station receives a second uplink transmission (i.e., a beam report or CSI report) including a report value derived (calculated) based on the downlink RS from the UE (S1504).

Here, the reported value may be i) a pair of the identifier of the reference signal resource (e.g., CRI, SSBRI) and L1-RSRP or ii) a pair of the identifier of the reference signal resource and L1-SNIR.

Here, the second uplink transmission may be performed via CG PUSCH.

Alternatively, the second uplink transmission may be performed via a PUSCH scheduled from the base station.

Additionally, based on a plurality of CSI reports being configured for the UE, the first uplink transmission or the second uplink transmission may include information indicating which of the plurality of CSI reports the report value is associated with.

Alternatively, based on multiple CSI reports being configured for the UE, the second uplink transmission may include multiple report values for the multiple CSI reports. In this case, for the multiple CSI reports, the highest report value may be positioned first, the highest report value may be reported as an absolute value, and the remaining report values may be reported as differential values for the highest report value.

In addition, based on multiple events being configured for the UE (e.g., for a single CSI report or for multiple CSI reports), the first uplink transmission or the second uplink transmission may include information indicating which of the multiple events the report value is associated with.

Additionally, the transmission time of the second uplink transmission may be determined as an offset from the transmission time of the first uplink transmission. For example, the transmission time of the second uplink transmission may be determined by the UE and included in the first uplink transmission. Alternatively, the transmission time of the second uplink transmission may be predefined or configured by a base station. For example, one or more offset candidates for the transmission time of the second uplink transmission may be configured for the UE, and the offset may be determined from the one or more offset candidates.

### General Device to which the Present Disclosure may be applied

FIG. 16 is a diagram which illustrates a block diagram of a wireless communication device according to an embodiment of the present disclosure.

In reference to FIG. 16, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [Industrial Availability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method comprising:
receiving, by a user equipment (UE), configuration information related to channel state information (CSI) report from a base station;
receiving, by the UE, a downlink reference signal (RS) on one or more RS resources from the base station;
transmitting, by the UE, a first uplink transmission to the base station based on an event related to the CSI report being satisfied; and
transmitting, by the UE, a second uplink transmission including a report value derived based on the downlink RS to the base station.

2. The method of claim 1, wherein the first uplink transmission is an uplink transmission notifying that the event has been satisfied.

3. The method of claim 1, wherein the first uplink transmission is performed through a physical uplink control channel (PUCCH).

4. The method of claim 2, wherein the notification that the event has been satisfied applies a transmission scheme for a scheduling request (SR).

5. The method of claim 1, wherein the second uplink transmission is performed through a configured grant (CG) physical uplink shared channel (PUSCH).

6. The method of claim 1, wherein the second uplink transmission is performed through a physical uplink shared channel (PUSCH) scheduled by the base station.

7. The method of claim 1, wherein based on a plurality of CSI reports being configured for the UE, the first uplink transmission or the second uplink transmission includes information indicating with which CSI report among the plurality of CSI reports the report value is associated.

8. The method of claim 1, wherein based on a plurality of CSI reports being configured for the UE, the second uplink transmission includes a plurality of report values for the plurality of CSI reports.

9. The method of claim 8, wherein for the plurality of CSI reports, a highest report value is located first,
wherein the highest report value is reported as an absolute value, and remaining report values are reported as differential values with respect to the highest report value.

10. The method of claim 1, wherein based on a plurality of events being configured for the UE, the first uplink transmission or the second uplink transmission includes information indicating with which event among the plurality of events the report value is associated.

11. The method of claim 1, wherein a transmission timing of the second uplink transmission is determined as an offset from a transmission timing of the first uplink transmission.

12. The method of claim 11, wherein the transmission timing of the second uplink transmission is determined by the UE and is transmitted by being included in the first uplink transmission.

13. The method of claim 11, wherein one or more offset candidates for the transmission timing of the second uplink transmission are configured for the UE, and
wherein the offset is determined from among the one or more offset candidates.

14. The method of claim 1, wherein the report value is either a pair of an identifier of an RS resource and Layer 1 reference signal received power (L1-RSRP), or a pair of an identifier of an RS resource and Layer 1 signal to interference and noise ratio (L1-SNIR).

15. The method of claim 1, wherein the downlink RS corresponds to one of a synchronization signal block (SSB) and a CSI-reference signal (CSI-RS).

16. A user equipment (UE) comprising:
at least one transceiver for transmitting and receiving a wireless signal; and
at least one processor for controlling the at least one transceiver,
wherein the at least one processor configured to:
receiving configuration information related to channel state information (CSI) report from a base station;
receiving a downlink reference signal (RS) on one or more RS resources from the base station;
transmitting a first uplink transmission to the base station based on an event related to the CSI report being satisfied; and
transmitting a second uplink transmission including a report value derived based on the downlink RS to the base station.

17. At least one non-transitory computer-readable medium storing at least one instruction, wherein the at least one instruction executable by at least one processor controls a user equipment (UE) to:
receiving configuration information related to channel state information (CSI) report from a base station;
receiving a downlink reference signal (RS) on one or more RS resources from the base station;
transmitting a first uplink transmission to the base station based on an event related to the CSI report being satisfied; and
transmitting a second uplink transmission including a report value derived based on the downlink RS to the base station.

18. A processing apparatus configured to control a user equipment (UE), the processing apparatus comprising:
at least one processor; and
at least one computer memory operably connected to the at least one processor and storing instructions that, based on being executed by the at least one processor, perform operations comprising:
receiving, by a user equipment, configuration information related to channel state information (CSI) report from a base station;
receiving, by the UE, a downlink reference signal (RS) on one or more RS resources from the base station;
transmitting, by the UE, a first uplink transmission to the base station based on an event related to the CSI report being satisfied; and
transmitting, by the UE, a second uplink transmission including a report value derived based on the downlink RS to the base station.

19. A method comprising:
transmitting, by a base station, configuration information related to channel state information (CSI) report to a user equipment (UE);
transmitting, by the base station, a downlink reference signal (RS) on one or more RS resources to the UE;
receiving, by the base station, a first uplink transmission from the UE based on an event related to the CSI report being satisfied; and
receiving, by the base station, a second uplink transmission including a report value derived based on the downlink RS fromt the UE.

20. A base station comprising:
at least one transceiver for transmitting and receiving a wireless signal; and
at least one processor for controlling the at least one transceiver,
wherein the at least one processor configured to:
transmitting configuration information related to channel state information (CSI) report to a user equipment (UE);
transmitting a downlink reference signal (RS) on one or more RS resources to the UE;
receiving a first uplink transmission from the UE based on an event related to the CSI report being satisfied; and
receiving a second uplink transmission including a report value derived based on the downlink RS fromt the UE.
